Europäisches Patentamt

European Patent Office

Office européen des brevets

(19)

(11) Publication number: **0 153 067**
**A2**

(12)

# EUROPEAN PATENT APPLICATION

(21) Application number: **85300714.4**

(22) Date of filing: **01.02.85**

(51) Int. Cl.⁴: **C 08 F 36/06, C 08 F 4/70**

(30) Priority: **01.02.84 JP 15019/84**

(43) Date of publication of application: **28.08.85**
**Bulletin 85/35**

(84) Designated Contracting States: **BE DE FR GB IT NL**

(71) Applicant: **JAPAN SYNTHETIC RUBBER CO., LTD.,**
**11-24, Tsukiji-2-chome Chuo-ku, Tokyo (JP)**

(72) Inventor: **Ono, Hisao, 1, Morigayamacho, Yokkaichi-shi**
**(JP)**
Inventor: **Tsutsumi, Fumio, 24-17, Hagigaokacho,**
**Yokkaichi-shi (JP)**
Inventor: **Sakakibara Mitsuhiko, 260-595,**
**Heizushinmachi, Yokkaichi-shi (JP)**
Inventor: **Okuya, Eitaro, 3-43, Shibagakicho Oobaneen**
**Komonocho, Mie-gun Mie-ken (JP)**

(74) Representative: **Tubby, David George et al, MARKS &**
**CLERK 57-60 Lincoln's Inn Fields, London WC2A 3LS**
**(GB)**

(54) **Diene polymers and process for producing the same.**

(57) Diene polymers are prepared by polymerizing a conjugated diene in an organic solvent solution of an active lithium-terminated polymer in the presence of (A) a cobalt compound and (B) carbon disulphide and/or phenylisothiocyanic acid, said diene polymer comprising a 1,2-polybutadiene portion comprising 70% by weight or more of 1,2-units.

EP 0 153 067 A2

M&C FOLIO: 799P49598          WANGDOC: 0061F

## DIENE POLYMERS AND PROCESS FOR PRODUCING THE SAME

This invention relates to a novel diene polymer having a high proportion of unsaturated side chains and to a novel process for producing the same.

It is known that a highly pure, highly crystalline 1,2-polybutadiene can be produced by polymerizing 1,3-butadiene in the presence of a 3-component catalyst comprising: a cobalt compound, an organoaluminium compound and carbon disulphide; or a cobalt compound, an organoaluminium compound and phenylisothiocyanic acid (Japanese Patent Publication No. 19,892/72 and Japanese Patent Application Kokai i.e. as laid open to public inspection No. 30,890/76). 1,2-Polybutadienes produced by polymerization in the presence of such a catalyst have high melting points and high crystallinities, and hence, their application is expected in such fields as plastic products, films, fibres, rubber-reinforcing polymers and the like. In particular, a diene rubber reinforced with such a 1,2-polybutadiene has excellent properties; therefore, various processes for producing such a diene rubber have been developed. These processes are disclosed, for example, in Japanese Patent Publication No. 17,666/74 and in Japanese Patent Applications Kokai Nos. 29,535/80, 31,802/80, 151,054/80 and 187,408/83.

All of these proceses use carbon disulphide or phenylisothiocyanic acid as a catalyst component. This gives rise to the formation of sulphur compounds, such as mercaptans, in the polymerization step. As a result, (1) the polymer produced has a strong and offensive odour, and, accordingly, its range of applications is limited, (2) the offensive odour in the production step is strong, which requires countermeasures to protect the environment, in particular the working environment and waste water disposal; and (3) the sulphur compounds formed, such as the mercaptans, act as a catalyst poison, which requires appropriate equipment for removal of these compounds during the purification of the recovered solvent.

We have now discovered a diene polymer having a high proportion of unsaturated side chains, but which is free from any mercaptan compound as an impurity.

This diene polymer may be prepared using carbon disulphide or phenylisothiocyanic acid as one component of the polymerization catalyst.

According to this invention, there is provided a diene polymer produced by polymerizing a conjugated diene monomer in an organic solvent solution of an active lithium-terminated polymer in the presence of a catalyst comprising, preferably consisting of, (A) a cobalt compound and (B) carbon disulphide and/or phenylisothiocyanic acid, said diene polymer comprising a 1,2-polybutadiene portion having a 1,2-configuration content of at least 70%.

The invention further provides a process for producing a diene polymer, by polymerizing a conjugated diene monomer in a solvent solution of an active lithium-terminated polymer in the presence of a catalyst comprising, preferably consisting of, (A) a cobalt compound and (B) carbon disulphide and/or phenylisothiocyanic acid.

The active lithium-terminated polymer used in this invention includes: monolithium- and dilithium-terminated aromatic vinyl polymers such as polystyryl-lithium, poly-α-methylstyryllithium and poly-p-methylstyryllithium; monolithium- and dilithium-terminated conjugated diene polymers such as polybutadienyllithium, polyisoprenyllithium, poly-2,3-dimethylbutadienyllithium and poly-2-phenylbutadienyllithium; monolithium- and dilithium-terminated vinylpyridine polymers such as poly-2-vinylpyridyllithium; and monolithium- and

4

dilithium-terminated (meth)acrylic acid ester polymers
such as polymethylmethacryllithium and
polymethylacryllithium.  It also includes monolithium-
and dilithium-terminated block copolymers or random
copolymers obtained by polymerizing at least two
different monomers in the presence of a lithium catalyst
such as lithium-terminated styrene-butadiene block
copolymers and lithium-terminated styrene-butadiene
random copolymers.  These block copolymers have chemical
structures which may be represented by the formulae
$(A-B)_n$, $(A-B)_n-A$ and $(A-B)_m-X$ (wherein A is a
polymer block of an aromatic vinyl compound; B is a
polymer block comprising a major amount of a conjugated
diene; $n \geq 1$; $m \geq 1$; and X is the residue of a coupling
agent), although this is not critical.  The block
copolymers represented by the formulae $(A-B)_n$ and
$(A-B)_n-A$ are particularly preferred.  The content of
the aromatic vinyl compound in the block copolymer is
not critical, although it is preferably from 5 to 70% by
weight.

In these copolymers, the aromatic vinyl compound
includes styrene, α-methylstyrene, α-ethylstyrene,
p-methylstyrene, p-ethylstyrene, α-phenylstyrene,
p-dimethylaminostyrene and p-trimethylsilylstyrene, of
which styrene is most preferred. The conjugated diene
includes butadiene, isoprene, piperylene,

5

2,3-dimethylbutadiene, 2-phenylbutadiene and
2-methoxybutadiene, of which butadiene and isoprene are
most preferred.

The polymerization degree of the active
lithium-terminated polymer is not critical.  The polymer
may vary from an oligomer to a high molecular weight
polymer.

The active lithium-terminated polymer can be
produced by polymerizing a monomer [such as an aromatic
vinyl compound, a conjugated diene compound,
vinylpyridine or a (meth)acrylic acid ester] in a
solvent [such as an aromatic hydrocarbon (e.g. benzene,
toluene or xylene), an aliphatic hydrocarbon (e.g.
pentane, hexane, heptane or octane), an ether (e.g.
tetrahydrofuran, diethyl ether, dibutyl ether,
di-2-ethylhexyl ether or diphenyl ether), a
nitrogen-containing compound (e.g. pyridine or tetraethylethylenediamine) or a mixture thereof], and in the
presence of a catalyst, namely, an organomonolithium or
organodilithium compound (such as methyllithium,
ethyllithium, propyllithium, isopropyllithium,
butyllithium, sec-butyllithium, t-butyllithium,
hexyllithium, octyllithium or 1,4-butanedilithium).  The
active lithium-terminated polymer thus produced still
retains catalytic activity.

6

Examples of the cobalt compound (A) used in this invention include: organic acid salts of cobalt, such as cobalt octylate, cobalt naphthenate, cobalt benzoate, cobalt oxalate, cobalt malonate or cobalt acetate; cobalt complexes of ethyl acetoacetate such as cobalt bisacetylacetonate or cobalt trisacetylacetonate; triarylphosphine complexes of cobalt halides such as the triphenylphosphine complex of cobalt bromide, the tris-m-tolylphosphine complex of cobalt bromide, the tris-m-xylylphosphine complex of cobalt bromide, the triphenylphosphine complex of cobalt chloride or the triphenylphosphine complex of cobalt iodide; pyridine complexes of cobalt halides; pyridine derivative complexes of cobalt halides such as the picoline complex of cobalt chloride; and the ethanol complex of cobalt chloride.

The carbon disulphide and/or phenylisothiocyanic acid (B) is preferably freed from dissolved oxygen by nitrogen bubbling or the like prior to use, although this is not critical.

The conjugated diene monomer is preferably butadiene, isoprene, a mixture of the two, or the like.

The diene polymer of this invention can be produced by adding, to a solvent solution of an active lithium-terminated polymer,

(A)     from 0.02 to 5 moles, preferably from 0.5 to 2 moles, of a cobalt compound,

(B)     from 0.02 to 10 moles, preferably from 0.2 to 5 moles, of carbon disulphide and/or phenylisothiocyanic acid, and

(C)     from 2 to 1,000,000 moles, preferably from 5 to 500,000 moles, of a conjugated diene monomer, per mole of lithium in said active lithium-terminated polymer and then polymerizing the resulting mixture.

The above components may be added together in various orders, for example: by adding simultaneously the cobalt compound (A), the carbon disulphide and/or phenylisothiocyanic acid (B) and the conjugated diene monomer (C) to the solvent solution of an active lithium-terminated polymer; by first contacting the cobalt compound (A) and part of the conjugated diene monomer (C) with the solvent solution of an active lithium-terminated polymer and then adding the carbon disulphide and/or phenylisothiocyanic acid (B) and the remainder of the conjugated diene monomer (C); or by first introducing the total amount of the conjugated diene monomer (C) into a reaction system, initiating the polymerization of the monomer (C) with the lithium catalyst, and adding, during this polymerization, the cobalt compound (A) and the carbon disulphide and/or

8

phenylisothiocyanic acid (B) to the reaction system to complete the polymerization.

The reaction temperature may vary over a wide range, for example from -50 to 150°C, more preferably from 0 to 80°C. It is preferable that carbon disulphide and/or phenylisothiocyanic acid be added after the active lithium-terminated polymer and the cobalt compound (A) have reacted with each other.

It is preferable that, when the conjugated diene is polymerized after the active lithium-terminated polymer has been contacted with the cobalt compound (A), a polymerization solvent be added for controlling the polymerization temperature or for controlling the melting point of the resulting diene polymer. Examples of such polymerization solvents include: aliphatic hydrocarbon solvents such as pentane, hexane, heptane, octane or cyclohexane; aromatic hydrocarbon solvents such as toluene, benzene or xylene; halogenated hydrocarbon solvents such as methylene chloride, ethylene dichloride, trichloroethane or chlorobenzene; ester solvents such as ethyl acetate, propyl acetate, butyl acetate, amyl acetate, ethyl octylate, ε-caprolactone or γ-valerolactone; alcohol solvents such as methanol, ethanol, isoprepanol, butanol, sec-butanol, octanol or ethylene glycol; ketone solvents such as acetone, methyl ethyl ketone, acetophenone or acetylacetone; nitrile solvents such as acetonitrile, adiponitrile or benzonitrile; and amide solvents such as ε-caprolactam, propiolactam, butyrolactam, valerolactam, N-methylpyrrolidone, N-ethylpyrrolidone, N-methylformamide, N-ethylformamide or N,N-dimethylformamide. In order to control the melting point of the diene polymer formed, polar solvents are preferred, and ester solvents, alcohol solvents, ketone solvents, nitrile solvents and amide solvents are more preferably used. These polar solvents may be used alone or in admixture with another solvent such as a hydrocarbon solvent. The larger the amount of the polar solvent used, the lower becomes the melting point of the diene polymer formed.

It is also possible that the solvent solution of the active lithium-terminated polymer can be contacted with the cobalt compound (A) and the resulting mixture mixed with water to obtain an aqueous suspension, to which the carbon disulphide and the conjugated diene monomer are added, and the conjugated diene monomer is then subjected to suspension polymerization.

In the process of this invention, when a diene oligomer, which has a low polymerization degree, is used as the active lithium-terminated polymer, a diene polymer having a high proportion of unsaturated side chains can be obtained, which polymer has properties equivalent to those of polymers produced with hitherto known catalyst systems but which is free from odour.

Further, various kinds of polymer compositions each comprising diene polymer having side chains having unsaturation in a high proportion can be produced by changing the type and polymerization degree of the active lithium-terminated polymer.

For example, a polystyrene-high-melting 1,2-polybutadiene block copolymer can be obtained by polymerizing butadiene in the presence of an organic solvent solution of an active lithium-terminated polystyrene.

By polymerizing butadiene in the presence of an organic solvent solution of an active lithium-terminated (co)polymer of a conjugated diene or conjugated dienes, such as butadiene or isoprene, according to this invention, there can be produced a conjugated diene (co)polymer-high-melting 1,2-polybutadiene block copolymer.

By polymerizing butadiene in the presence of an organic solvent solution of an active lithium-terminated styrene-conjugated diene random copolymer according to

0153067

11

this invention, a styrene-conjugated copolymer-high melting 1,2-polybutadiene block copolymer can be produced.

A styrene-conjugated block copolymer-high melting 1,2-polybutadiene block copolymer can be produced by polymerizing butadiene in the presence of an organic solvent solution of an active lithium-terminated styrene-conjugated diene block copolymer according to this invention.

Specific examples of the polymers produced above include the following polymers, in which each symbol refers to:

| | |
|---|---|
| S: | styrene |
| B: | butadiene |
| I: | isoprene |
| SBR: | styrene-butadiene copolymer |
| SIR: | styrene-isoprene copolymer |
| BR: | polybutadiene |
| IR: | polyisoprene |
| BIR: | butadiene-isoprene copolymer |
| 1,2-BR: | high-melting 1,2-polybutadiene |
| SBS: | styrene-butadiene block copolymer (includes $(S-B)_n$ and $(S-B)_n-S$ type polymers) |
| SIS: | styrene-isoprene block copolymer (includes $(S-I)_n$ and $(S-I)_n-S$ type polymers) |

12

Conjugated (co)polymer-high-melting 1,2-polybutadiene block copolymers:

     BR-1,2-BR,  IR-1,2-BR,  BIR-1,2-BR Styrene-conjugated diene random copolymer-high-melting 1,2-polybutadiene block copolymers:

     SBR-1,2-BR,  SIR-1,2-BR,  1,2-BR-SBR-1,2-BR, 1,2-BR-SIR-1,2-BR.

Styrene-conjugated diene block copolymer-high-melting 1,2-polybutadiene block copolymers:

     SBS-1,2-BR,  SIS-1,2-BR,  1,2-BR-SBS-1,2-BR, 1,2-BR-SIS-1,2-BR.


The diene polymers produced according to this invention possess improved mechanical properties and have a high utility in industry. For example, in the case of a styrene-butadiene block copolymer-high crystalline 1,2-polybutadiene block copolymer, the mechanical strengths of the styrene-butadiene block copolymer (such as the tensile strength, elongation and flex resistance) are improved, and the extrudability, abrasion resistance, etc. are excellent.

In this invention, the melting point of the high-melting 1,2-polybutadiene is preferably at least 100°C, more preferably at least 120°C, and most preferably at least 150°C. Such a 1,2-polybutadiene imparts a great reinforcing effect to a composition comprising the polybutadiene, as a result of which the composition has excellent mechanical strengths.

The 1,2-configuration content (1,2-content) in the 1,2-polybutadiene portion formed by polymerizing butadiene with the above-mentioned cobalt catalyst is preferably at least 70%, more preferably at least 80%, and particularly preferably at least 90%.

A syndiotactic 1,2-polybutadiene having a low melting point cannot impart a sufficient reinforcing effect.

The weight ratio of active lithium-terminated polymer to high-melting 1,2-polybutadiene in a composition comprising these polymers is not critical, although it is preferably from 100:1 to 100:1000, more preferably from 100:1 to 100:200, still more preferably from 100:2 to 100:100, and most preferably from 100:3 to 100:30 for best reinforcing effect. When the ratio is lower than 100:1, the reinforcing effect of the 1,2-polybutadiene is not sufficient. When the ratio is higher than 100:200, the workability of the composition becomes poor, but this may be acceptable in some cases.

The diene polymer produced according to this invention can be used in such applications as various industrial parts, shoe soles, rubber vibration insulators, resin modifiers, tyres, adhesives and the like.

The invention will be explained in more detail below referring to the following Examples. In the Examples, the 1,2-content was measured by nuclear magnetic resonance (NMR) spectrometry; the melting point was measured by differential scanning calorimetry; and the reduced viscosity was measured at 100°C by dissolving 0.2g of a sample in tetrahydronaphthalene at 100°C.

## EXAMPLE 1

### Preparation of catalyst

90 ml of dehydrated toluene and 16.5 ml of styrene were charged into a 300ml pressure bottle which had first been purged with nitrogen, and the pressure bottle was stoppered. Into the bottle were then charged 9 ml (1.6 moles/litre) of commercially available butyllithium. The resulting mixture was allowed to react for 3 hours at 50°C in a polymerization tank. About 100% of styrene was polymerized. Styrene/Li = 10/1 (molar ratio). The reaction mixture is hereinafter referred to as "polystyryllithium solution (a)".

In a separate 30ml pressure bottle purged with
nitrogen was placed a polytetrafluoroethylene (Teflon -
trade mark)-coated stirrer. Into the bottle were
charged 9.4 ml of dehydrated toluene and 1.92 ml of a
0.25 mole/litre solution of cobalt octylate in toluene,
and the pressure bottle was stoppered. Thereafter, 1 ml
of butadiene for catalyst preparation was placed
therein, and the resulting mixture was cooled to 0°C.
While rotating the stirrer vigorously, 7.7 ml of the
polystyryllithium solution (a) prepared above was added,
and the resulting mixture was reacted for 15 minutes.
Thus, a cobalt catalyst solution A (Li/Co molar ratio =
2.0) was obtained.

## Polymerization

In a 300 ml pressure bottle purged with nitrogen
were placed 200ml of methylene chloride, and the
pressure bottle was stoppered. Into the pressure bottle
were charged 27 g of butadiene and 0.24 mM of carbon
disulphide. 10 ml of the cobalt catalyst solution A
prepared above (0.24 mM as cobalt) were then added. The
resulting mixture was polymerized at 20°C for 1 hour.
The resulting polymer slurry was added to methanol
containing 0.5% of BHT to coagulate the polymer by a
conventional method. The polymer was vacuum-dried at
40°C, giving 22.9 g of polymer. The butadiene polymer
portion of this polymer had a 1,2-content of 98% and this polymer had a melting point Tm of 197°C. Its reduced viscosity was 1.6 dl/g. The polymer had almost no odour of sulphur compounds. On analysis by gas chromatography of the solvent recovered, no mercaptans (e.g. ethyl mercaptan or butyl mercaptan) were detected.

## EXAMPLE 2

Using the cobalt catalyst solution A used in Example 1, polymerization and post-treatment were conducted in the same manner as in Example 1, except that the polymerization solvent was replaced by 170ml of methylene chloride and 30ml of ethyl acetate. The yield of the polymer was 18.3g. The polybutadiene portion of this polymer had a 1,2-content of 93% and this polymer had a melting point Tm of 172°C. Its reduced viscosity was 1.5dl/g. The polymer had no odour of sulphur compounds.

## EXAMPLE 3

### Preparation of catalyst

In a 30ml pressure bottle purged with nitrogen was placed a polytetrafluoroethylene (Teflon) -coated stirrer. Into the bottle were charged 13.3 ml of dehydrated toluene and 1.92 ml of a 0.25 mole/litre solution of cobalt octylate in toluene, and then the pressure bottle was stoppered. To the pressure bottle was fed 1 ml of butadiene and the resulting mixture was cooled to 0°C. While rotating the stirrer vigorously, 3.9ml of the polystyryllithium solution (a) of Example 1 were charged into the pressure bottle and the resulting mixture was reacted for 15 minutes. Thus, a cobalt catalyst solution B (Li/Co molar ratio = 1.0) was obtained.

Polymerization

In a 300 ml pressure bottle purged with nitrogen were placed 200 ml of methylene chloride, and the pressure bottle was stoppered. To the pressure bottle were fed 27g of butadiene and 0.24 mM of carbon disulphide. 10ml of the cobalt catalyst solution B (0.24 mM as cobalt) were then charged into the bottle. The resulting mixture was polymerized at 20°C for 1 hour.

According to a conventional method, the polymer slurry obtained was added to methanol containing 0.5% of BHT to coagulate the polymer. The polymer was then vacuum-dried at 40°C, to obtain 19.5g of a polymer. The butadiene polymer portion of this polymer had a 1,2-content of 98% and this polymer had a Tm of 197°C. Its reduced viscosity was 1.7dl/g. The polymer had almost no odour of sulphur compounds. On analysis by gas chromatography of the solvent recovered, no mercaptans (e.g. ethyl mercaptan or butyl mercaptan) were detected.

## EXAMPLE 4

### Preparation of Catalyst

In a 300 ml pressure bottle purged with nitrogen were placed 101.5ml of dehydrated cyclohexane and 5.0ml of styrene, and the pressure bottle was stoppered. Into the pressure bottle were charged 9ml of commercially available butyllithium (1.6 moles/litre), and the resulting mixture was reacted for 16 hours in a polymerization tank at 50°C. About 100% of styrene was polymerized. Styrene/Li molar ratio = 3/1. The reaction mixture is hereinafter referred to as "polystyryllithium solution (b)".

A stirrer was placed in a separate 30ml pressure bottle purged with nitrogen. Into the bottle were charged 9.4ml of dehydrated cyclohexane and 1.92 ml of a 0.25 mole/litre solution of cobalt octylate in cyclohexane, and the pressure bottle was stoppered. Into the pressure bottle was charged 1 ml of butadiene and the resulting mixture was cooled to 0°C. While rotating the stirrer vigorously, 7.7ml of polystyryllithium solution (b) were added to the mixture, and the resulting mixture was reacted for 15 minutes. Thus, a cobalt catalyst solution C was obtained.

## Polymerization

In a 300 ml pressure bottle purged with nitrogen were placed 200ml of methylene chloride, and the pressure bottle was stoppered. Into the pressure bottle were charged 27g of butadiene and 0.24 mM of carbon disulphide. 10 ml of cobalt catalyst solution C (0.24 mM as cobalt) were then charged thereinto, and the resulting mixture was polymerized for 1 hour.

According to a conventional method, the polymer slurry obtained was added to methanol containing 0.5% of BHT to coagulate the polymer. The polymer was then vacuum-dried at 40°C to obtain 20.7 g of a polymer. The butadiene polymer portion of this polymer had a 1,2-content of 98% and this polymer had a Tm of 197°C. Its reduced viscosity was 1.6 dl/g. The polymer gave a very slight odour of sulphur compounds. On analysis by gas chromatography of the solvent recovered, no mercaptans (e.g. ethyl mercaptan of butyl mercaptan) were detected.

## EXAMPLE 5

## Preparation of Catalyst

In a 300 ml pressure bottle purged with nitrogen were placed 57 ml of dehydrated toluene and 49.5 ml of styrene, and the pressure bottle was stoppered. Into the pressure bottle were charged 9 ml of commercially available butyllithium (1.6 moles/litre), and the resulting mixture was reacted for 3 hours in a polymerization tank at 50°C. About 100% of styrene was polymerized. Styrene/Li molar ration = 30/1. The resulting reaction mixture is hereinafter referred to as "polystyryllithium solution (c)".

In a 30ml pressure bottle purged with nitrogen was placed a polytetrafluoroethylene (Teflon) -coated stirrer. Into the bottle were further charged 9.4 ml of dehydrated toluene and 1.92 ml of a 0.25 mole/litre solution of cobalt octylate in toluene and the pressure bottle was stoppered. Into the pressure bottle was charged 1 ml of butadiene and the resulting mixture was cooled to 0°C. While rotating the stirrer vigorously, 7.7 ml of polystyryllithium solution (c) were added to the mixture and the resulting mixture was reacted for 15 minutes. Thus, a cobalt catalyst solution D was obtained.

Polymerization

In a 300 ml pressure bottle purged with nitrogen were placed 200 ml of methylene chloride, and the pressure bottle was stoppered. Into the pressure bottle were charged 27 g of butadiene and 0.24 mM of carbon disulphide. 10 ml of cobalt catalyst solution D (0.24 mM as cobalt) were then charged thereinto, and the resulting mixture was polymerized at 20°C for 1 hour.

According to a conventional method, the polymer slurry obtained was added to methanol containing 0.5% of BHT to coagulate the polymer. The polymer was vacuum-dried at 40°C, to obtain 24.1 g of a polymer. The 1,2-polybutadiene portion of this polymer had a 1,2-content of 98% and this polymer had a Tm of 197°C. Its reduced viscosity was 1.5 dl/g. The polymer had almost no odour of sulphur compounds. On analysis by gas chromatography of the solvent recovered, no mercaptans (e.g. ethyl mercaptan or butyl mercaptan) were detected.

COMPARATIVE EXAMPLE 1

In a 300 ml pressure bottle purged with nitrogen were placed 200 ml of dehydrated toluene, and then the pressure bottle was stoppered. Into the pressure bottle were charged 27 g of butadiene, 3.6 ml of a 0.4 mole/litre solution of triethylaluminium in toluene and 0.96 ml of a 0.25 mole/litre solution of cobalt octylate in toluene in that order. 4.8 ml of a 0.1 mole/litre solution of carbon disulphide in toluene were then added to initiate polymerization. The pressure bottle was placed in a constant temperature bath at 20°C and the contents of the pressure bottle were subjected to polymerization for 1 hour. The polymer formed was treated in the same manner as in Example 1. The yield of polymer was 20.1 g. The 1,2-polybutadiene portion of this polymer had a 1,2-content of 98% and this polymer had a Tm of 198°C. The polymer had a strong odour of sulphur compounds. One ppm of ethyl mercaptan was detected in the toluene recovered.

COMPARATIVE EXAMPLE 2

In a 300 ml pressure bottle which had first been purged with nitrogen were placed 200 ml of dehydrated toluene, and the pressure bottle was stoppered. Then, into the pressure bottle were charged 27 g of butadiene, 0.96 ml of a 0.25 mole/litre solution of cobalt octylate in toluene and 4.8 ml of a 0.1 mole/litre solution of carbon disulphide in toluene in that order. To the resulting mixture was added 1.2 ml of a 0.4 mole/litre solution of butyllithium in toluene, to initiate polymerization. The pressure bottle was placed in a constant temperature bath at 20°C and polymerization was conducted for 1 hour. Subsequently, the resulting polymer was treated in the same manner as in Example 1. The yield of polymer obtained was 3.4 g. The 1,2-polybutadiene portion of this polymer had a 1,2-content of 98% and this polymer had a Tm of 198°C. The polymer had a very strong odour of sulphur compounds. Three ppm of butyl mercaptan was detected in the solvent recovered.

## EXAMPLE 6

In a 5 litre autoclave purged with sufficiently dried nitrogen were placed 2,000 g of dehydrated cyclohexane, 400 g of butadiene and 3.75 mM of butyllithium in that order, and polymerization was conducted at 60°C. After conversion had reached 100%, 50 g of butadiene, 3.75 mM of cobalt octanoate and 3.75 mM of carbon disulphide in that order were added to the reaction system. The resulting mixture was polymerized for 2 hours, after which 4 g of 2,6-di-t-butyl-p-cresol were added to the reaction mixture, and the solvent was removed by steam stripping. The residue was vacuum-dried at 50°C for 24 hours, to obtain 445 g of a rubbery polymer.

The 1,2-content of the total polybutadiene portions in the polymer obtained was 19%, the melting point of the polymer was 175°C, and the reduced viscosity of the polymer was 1.3 dl/g. The polymer had no odour of sulphur compounds. On analysis by a gas chromatography, no mercaptan compounds were detected in the solvent recovered.

## EXAMPLE 7

Polymerization was conducted in the same manner as in Example 6, except that the 400 g of butadiene used in Example 6 was replaced by the same amount of sufficiently dehydrated isoprene, to obtain 450 g of a rubbery polymer. The 1,2-content of the total polybutadiene portions in this polymer was 10% (excluding the 3,4-content of isoprene units). The polymer had a melting point of 174°C and a reduced viscosity of 1.1 dl/g. The polymer had no odour of sulphur compounds. No mercaptan compounds were detected in the solvent recovered.

## EXAMPLE 8

In a 5 litre autoclave purged with sufficiently dried nitrogen were placed 2,000 g of dehydrated cyclohexane, 20 g of dehydrated tetrahydrofuran, 80 g of dehydrated styrene and 320 g of dehydrated butadiene. To the resulting mixture were added 3.5 mM of butyllithium, and polymerization was conducted at 40°C. After the conversion had reached 100%, 50 g of butadiene, 3.5 mM of cobalt octanoate and 3.5 mM of carbon disulphide in that order were added to the reaction mixture. The resulting mixture was polymerized for 2 hours. Then, 4 g of 2,6-di-t-butyl-p-cresol were added and the solvent was removed by steam stripping. The residue was vacuum-dried at 50°C for 24 hours, to obtain 450 g of a rubbery polymer.

The 1,2-content of the total polybutadiene portions in the polymer obtained was 65%, and the reduced viscosity of the polymer was 1.2 dl/g. The polymer had a melting point of 175°C (based on the 1,2-polybutadiene portion). The polymer had no odour of sulphur compounds. No mercaptan compounds were detected in the solvent recovered.

EXAMPLE 9

In a 5 litre autoclave purged with sufficiently dried nitrogen were placed 2,000 g of dehydrated toluene and 200 g of dehydrated styrene. Into the autoclave were charged 3 mM of butyllithium, and the resulting mixture was polymerized at 50°C. After the conversion had reached 100%, 200 g of butadiene, 3 mM of cobalt octanoate and 3 mM of carbon disulphide were charged thereinto in that order. The resulting mixture was subjected to polymerization for 2 hours, and then 4 g of 2,6-di-t-butyl-p-cresol were added. The solvent was removed by steam stripping. The residue was vacuum-dried at 50°C for 24 hours, to obtain 390 g of a resinous polymer.

The 1,2-content of the total polybutadiene portions in the polymer obtained was 98%, the melting point of the polymer was 170°C and the reduced viscosity of the polymer was 1.0 dl/g. The polymer had no odour of sulphur compounds. No mercaptan compounds were detected in the solvent recovered.

## EXAMPLE 10

Polymerization was conducted in the same manner as in Example 9, except that the amounts of styrene and butadiene were changed to 300 g and 100 g, respectively, to obtain 395 g of a resinous polymer. The 1,2-content of the total polybutadiene portions in the polymer was 98%, the melting point of the polymer was 174°C and the reduced viscosity of the polymer was 0.9 dl/g. The polymer had no odour of sulphur compounds. No mercaptan compounds were detected in the solvent recovered.

## EXAMPLE 11

In the same manner as in Example 6, butadiene was polymerized using butyllithium. After the conversion had reached 100%, 50 g of butadiene, 3.75 mM of cobalt octanoate, 3.75 mM of carbon disulphide and 200 g of
ethyl acetate were charged in that order. The resulting
mixture was subjected to polymerization for 2 hours. In
the same manner as in Example 6, 445 g of a dry rubbery
polymer was obtained. The 1,2-content of the total
polybutadiene portions in the polymer obtained was 20%.
The polymer had a melting point of 161°C and a reduced
viscosity of 1.2 dl/g. The polymer had no odour of
sulphur compounds. No mercaptan compounds were detected
in the solvent recovered.

## EXAMPLE 12

In the same manner as in Example 9, styrene was
polymerized using butyllithium. After the conversion
had reached 100%, 200 g of butadiene was added. 3 mM of
cobalt octanoate, 3 mM of carbon disulphide and 200 g of
ethyl acetate were then added. Polymerization was
conducted for 2 hours. The polymer formed was purified
and dried by a conventional method, to obtain 385 g of a
resinous polymer. The polybutadiene portions of this
polymer had a 1,2-content of 96%. This polymer had a
melting point of 150°C and a reduced viscosity of 0.8
dl/g. The polymer had no odour of sulphur compounds.
No mercaptan compounds were detected in the solvent
recovered.

## EXAMPLE 13

In the same manner as in Example 6, butadiene was polymerized using butyllithium. After the conversion had reached 100%, 50 g of butadiene was added. To the reaction mixture were then added 3.75 mM of cobalt octanoate and 3.75 mM of phenylisothiocyanic acid. The resulting mixture was polymerized for 2 hours. The polymer formed was purified and dried by a conventional method, to obtain 440 g of a rubbery polymer. The 1,2-content of the total polybutadiene portions in the polymer obtained was 19%. The polymer had a melting point of 175°C and a reduced viscosity of 1.4 dl/g. The polymer had no odour of sulphur compounds.

## EXAMPLE 14

In a 5 litre autoclave purged with sufficiently dried nitrogen were placed 200 g of dehydrated toluene and 200 g of dehydrated styrene. 3.5 mM of butyllithium were added, and polymerization was conducted at 60°C. After the polymerization conversion had reached 100%, 200 g of butadiene were added and further polymerization was conducted. Then, to the reaction mixture were added 50 g of butadiene, 3.5 mM of cobalt octanoate and 3.5 mM of carbon disulphide in that order. The resulting mixture was subjected to polymerization for 2 hours.

Subsequently, 4 g of 2,6-di-t-butyl-p-cresol were added
and the solvent was removed by steam stripping. The
residue was dried at 50°C for 24 hours, to obtain 440 g
of a resinous polymer. The 1,2-content of the total
polybutadiene portions in the polymer obtained was 25%.
The polymer had a melting point of 176°C and a reduced
viscosity of 1.3 dl/g. The polymer had no odour of
sulphur compounds. No mercaptan compounds were detected
in the solvent recovered.

### COMPARATIVE EXAMPLE 3

In a 5 litre autoclave purged with sufficiently
dried nitrogen, 400 g of a polybutadiene obtained using
butyllithium (reduced viscosity: 1.5 dl/g, 1,2-content:
10%) were dissolved in 2,000 g of dehydrated
cyclohexane. 50 g of dehydrated butadiene, 3.5 mM of
cobalt octanoate, 3.5 mM of butyllithium and 3.5 mM of
carbon disulphide were added, in that order. The
resulting mixture was polymerized at 50°C for 1 hour.
Then, 4 g of 2,6-di-t-butyl-p-cresol were added and the
solvent was removed by steam stripping. The residue was
vacuum-dried at 50°C for 24 hours, whereby 445 g of a
rubbery polymer was obtained. The 1,2-content of the
total polybutadiene portions in the polymer obtained was
19%. The polymer had a melting point of 194°C and a
reduced viscosity of 1.4 dl/g. The polymer had an inherent odour of sulphur compounds. One ppm of mercaptan compounds (such as butyl mercaptan) were detected in the solvent recovered.

## COMPARATIVE EXAMPLE 4

In a 5 litre autoclave were placed 2,000 g of dehydrated cyclohexane and 400 g of dehydrated butadiene. 3.75 mM of butyllithium were added, and polymerization was conducted at 60°C. When the conversion had reached 45%, 3.1 mM of water was added in the form of a saturated toluene solution and the resulting mixture was cooled to 30°C. 4 mM of butyllithium were then added, followed by 10 mM of diethylaluminium monochloride, 0.15 mM of cobalt octylate and 0.4 mM of carbon disulphide. The resulting mixture was polymerized at 30°C for 10 minutes. Then, 4 g of 2,6-di-t-butyl-p-cresol were added and the solvent was removed by steam stripping. The residue was dried at 50°C for 24 hours, to obtain 202 g of a rubbery polymer. The 1,2-content of the total polybutadiene portions in the polymer obtained was 19%. The polymer had a melting point of 197°C and a reduced viscosity of 1.5 dl/g. The polymer had a strong odour of sulphur compounds. Ethyl mercaptan and butyl mercaptan were detected in the solvent recovered.

## EXAMPLE 15

Synthesis of SBS block copolymer

In a 5 litre autoclave purged with nitrogen were placed 80 g of styrene and 2,800 ml of cyclohexane containing 150 ppm of tetrahydrofuran which had first been subjected to dehydration and oxygen removal. The mixture was heated to 50°C, and then 15.6 ml of a 0.5 mole/litre solution of butyllithium in cyclohexane was added. Polymerization of styrene was initiated. After 1 hour, 240 g of butadiene was added, the temperature of the contents in the autoclave was raised to 60°C, and polymerization was conducted for 1.5 hours, whereby the butadiene was completely polymerized. Subsequently, 80 g of styrene were added and polymerization was conducted for 1 hour, to confirm that the polymerization had proceeded substantially quantitatively. Then, the autoclave was cooled to 20°C.

1,2-Polymerization of butadiene

To the polymer solution obtained above were added 200 g of butadiene. Subsequently, 19.5 ml of a 0.20 mole/litre solution of cobalt octylate in cyclohexane were added. The mixture was stirred for 10 minutes. 19.5 ml of carbon disulphide (0.20 mole/litre) were then added, and the resulting mixture was polymerized at 20°C for 2 hours. The resulting polymer solution was taken out of the autoclave. To the solution were added 2 g of BHT and, after thorough stirring, steam stripping was conducted to remove the solvent. The residue was vacuum-dried at 50°C for 3 days, to obtain 508 g of a polymer (67.5% as the yield of a 1,2-BR). In 100 ml of toluene was dissolved 0.5 g of this polymer, to find that 78% of the polymer had been dissolved in toluene and 22% had not. The polymer had a glass transition temperature of -103°C and a melting point of 166°C. The toluene-soluble portion was subjected to GPC. The chromatogram obtained showed a shoulder on the higher molecular weight side. The toluene-soluble portion had a weight average molecular weight of 136,000.

## EXAMPLES 16 to 18

An SBS block copolymer was produced in the same manner as in Example 15. The same subsequent procedure as in Example 15 was repeated, except that the amount of butadiene added in the step of 1,2-polymerization of butadiene was changed as shown in Table 1.

As is obvious from the results of the flex test shown in Table 2, the novel block copolymers obtained according to this invention have no wrinkles on the surfaces when flexed and have very excellent flexibility.

## COMPARATIVE EXAMPLE 5

In the same manner as in Example 15, except that
1,2-polymerization of butadiene was not conducted, an
SBS block copolymer was produced.

The yield of the copolymer was 99%. The copolymer
had a weight average molecular weight of 91,000.

## COMPARATIVE EXAMPLE 6

In this case the styrene-butadiene-styrene block
copolymer of Comparative Example 5 was mixed with a
highly crystalline 1,2-BR.

50 g of a crystalline, syndiotactic 1,2-BR (powder)
having a melting point of 195°C produced by the method
of Japanese Patent Publication No. 19,892/72 were mixed
with 200 g of the SBS block copolymer of Comparative
Example 5 for about 10 minutes by means of a heated roll
at 150°C, to obtain a composition.

## Evaluation of physical properties of polymer

Each of the samples of Examples 15 to 18 and Comparative Examples 5 and 6 was placed in a mould, heated to 160°C and allowed to stand for 8 minutes. Then it was placed in a cooling press and cooled while applying a pressure of 100 kg/cm$^2$, whereby sheets for evaluation were prepared. These sheets were evaluated for physical properties according to the predetermined test methods. Tensile test was conducted in accordance with JIS K 6301.

Table 1

| | Example | | | | Comp. Example |
|---|---|---|---|---|---|
| | 15 | 16 | 17 | 18 | 5 |
| Amount of butadiene used in 1,2-polymerization of butadiene (g) | 200 | 160 | 80 | 40 | 0 |
| Yield of polymer (g) | 516 | 508 | 437 | 424 | 397 |
| Yield of 1,2-BR portions (%) | 58 | 68 | 46 | 60 | 0 |
| Tg of polymer (°C) | -103 | -104 | -105 | -105 | -105 |
| Tm of polymer (°C) | 166 | 168 | 169 | 165 | - |
| Toluene-soluble portion of polymer* (%) | 78 | 86 | 90 | 93 | 100 |
| Toluene-insoluble portion of polymer** (%) | 22 | 14 | 10 | 7 | 0 |
| Weight average molecular weight of toluene-soluble portion of polymer (x $10^{-4}$) | 13.6 | 14.5 | 13.8 | 13.8 | 10.7 |
| 1,2-Content of total polybutadiene portions in toluene-soluble portion of polymer (%) | 18.0 | 16.0 | 14.5 | 14.2 | 13.8 |

\* Polymer comprising as major components an SBS block copolymer-high crystalline 1,2-BR and an SBS block copolymer.

\*\* Polymer comprising as a major component a high crystalline 1,2-polybutadiene homopolymer.

## Table 2

| | | | Example | | | | Comparative Example | |
|---|---|---|---|---|---|---|---|---|
| | | | 15 | 16 | 17 | 18 | 5 | 6 |
| Tensile test result | | 100% modulus (kg/cm²) | 37 | 36 | 35 | 33 | 37 | 45 |
| | | 300% modulus (kg/cm²) | 59 | 56 | 53 | 49 | 53 | 69 |
| | | Tensile strength (kg/cm²) | 200 | 200 | 230 | 215 | 205 | 135 |
| | | Elongation (%) | 620 | 620 | 670 | 670 | 670 | 420 |
| Flex test result | | Crack length when flexed 1,000 times (mm) | 2.2 | 2.2 | 2.3 | 2.3 | 2.2 | 2.4 |
| | | Appearance of sheet | Smooth | Smooth | Smooth | Smooth | Many wrinkles on the surface | Smooth |
| | | Crack length when flexed 100,000 times (mm) | 3.5 | 2.8 | 3.3 | 3.5 | Broken | Broken |
| | | Appearance of sheet | Smooth | Smooth | Smooth | Smooth | Fine cracks on the surface | |
| | | Crack length when flexed 500,000 times (mm) | 8.1 | 6.1 | 5.6 | 5.2 | – | – |
| | | Appearance of sheet | Smooth | Smooth | Smooth | Smooth | | |
| Akron abroder test Abrasion index* | | | 100 | 105 | 98 | 107 | 57 | 64 |

* Abrasion index = $\dfrac{\text{Abrasion volume of the Example 15 sample (cc)}}{\text{Abrasion volume of sample of other Example or Comparative Example (cc)}} \times 100$

## EXAMPLE 19

### Synthesis of SIS block copolymer

In a 5 litre autoclave purged with nitrogen were placed 30 g of styrene and 2,800 ml of cyclohexane containing 150 ppm of tetrahydrofuran which had first been subjected to dehydration and oxygen removal. They were heated to 50°C. 15.6 ml of a 0.5 mole/litre solution of butyllithium in cyclohexane were added, and polymerization of styrene was initiated. After 1 hour, 340 g of isoprene were added. The temperature of the autoclave contents was increased to 60°C and polymerization was conducted for 3 hours. Then, 30 g of styrene were added and polymerization was further conducted for 1 hour, to confirm that the polymerization had proceeded substantially quantitatively. Then the autoclave was cooled to 20°C.

### 1,2-Polymerization of butadiene

To the polymer solution obtained above were added 160 g of butadiene, followed by 19.5 ml of a 0.20 mole/litre solution of cobalt octylate in cyclohexane. They were stirred for 10 minutes and then 19.5 ml of a 0.20 mole/litre solution of carbon disulphide in cyclohexane were added. Subsequently, polymerization was conducted at 20°C for 2 hours. The polymer solution was taken out of the autoclave. To the solution was added 2 g of BHT and, after thorough stirring, the solution was subjected to steam stripping to remove the solvent. The residue was vacuum-dried at 50°C for 3 days, whereby 471 g of a polymer was obtained (45% as the yield of 1,2-BR). In the same manner as in Example 15, the toluene-soluble portion of the polymer was measured and found to be 82.0%. The toluene-insoluble portion was 18.0%. The glass transition temperature Tg of the polymer was -72°C and its melting point Tm was observed at 149°C and at 159°C. The toluene-soluble portion had a number average molecular weight Mn of 97,000 and a weight average molecular weight Mw of 120,000. Mw/Mn = 1.24.


## EXAMPLE 20


Production of polymer

In a 800 ml autoclave which had first been purged with nitrogen were placed 350 ml of cyclohexane which had been subjected to dehydration and oxygen removal and 0.57 ml of a 0.50 mole/litre solution of tetrahydrofuran. 10 g of styrene and 5.85 ml of a 0.50 mole/litre solution of butyllithium (5.85 ml corresponds to 2.93 mM of butyllithium) were added. The resulting mixture was polymerized at 50°C for 1 hour. 30 g of butadiene were added and polymerization was conducted at 60°C for 2 hours. 10 g of styrene were added and polymerization was conducted for 1 hour, whereby a styrene-butadiene-styrene block copolymer (SBS) was formed. The polymerization conversion was almost 100%. Without terminating the polymerization, the whole mixture was cooled to 20°C. Then, 20 g of butadiene and 7.3 ml of a 0.2 mole/litre solution of cobalt octylate in cyclohexane (7.3 ml corresponds to 1.46 mM of cobalt octylate) were added, followed by 2.92 ml of a 0.5 mole/litre solution of carbon disulphide in cyclohexane (2.92 ml corresponds to 1.46 mM of carbon disulphide). Polymerization was conducted at 20°C for 2 hours. Then, by adding 10 ml of methanol, the polymerization was terminated. The polymer formed was coagulated in methanol containing 0.1% of BHT and then vacuum-dried at 50°C overnight, whereby 64.4 g of a polymer was obtained. The polymerization conversion in the second step of 1,2-polymerization of butadiene corresponds to 72%.

Fractionation of polymer

5 g of the polymer produced above were dissolved in 100 ml of toluene. The resulting solution was subjected to high speed centrifugation at 10,000 rpm to separate

it into a toluene-soluble portion (A) and a toluene-insoluble portion (I). The toluene-insoluble portion was 20.2% of the original polymer. Methanol was added in small portions to the toluene-soluble portion to precipitate part of the polymer of the toluene-soluble portion and thus Sample B was obtained. Then, a large amount of methanol was added to the residue to obtain Sample C. Thus, the toluene-soluble portion of the original polymer was subjected to fractional precipitation to obtain Samples B and C. Incidentally, the styrene-butadiene-styrene block copolymer produced in the first step of polymerization was named "Sample S".

## Results of measurement of molecular weight, etc

Samples B, C and S were subjected to GPC measurement at 30°C.

Sample I was subjected to GPC measurement in o-dichlorobenzene at 120°C.

1 o-dichlorobenzene at 120°C.

Table 3

| Sample | Result of GPC measurement | | | Microstructure of butadiene portion in polymer and amount of bound styrene in polymer | | | |
|---|---|---|---|---|---|---|---|
| | $M_n$ ($\times 10^{-4}$) | $M_w$ ($\times 10^{-4}$) | $M_w/M_n$ | Trans 1,4 (%) | Vinyl (%) | Cis 1,4 (%) | Amount of bound styrene (%) |
| B | 5.2 | 6.4 | 1.23 | 38.9 | 30.1 | 31.0 | 34.6 |
| C | 3.7 | 4.3 | 1.16 | 49.3 | 13.6 | 37.1 | 39.1 |
| I | 0.33 | 0.78 | 2.36 | – | – | – | – |
| S | 3.7 | 4.1 | 1.10 | 49.5 | 14.0 | 36.5 | 40.0 |

With respect to Samples B, C and S, the microstructure of the butadiene portion and the amount of bound styrene were measured after each sample had been dissolved in carbon disulphide.

With respect to Sample I, the measurements of the above two items were impossible because the sample was insoluble in carbon disulphide.

In view of the microstructure of the butadiene portion and the molecular weight obtained from the GPC measurement, Sample C is identical with Sample S (SBS block copolymer).

In contrast, Sample B, as compared with Sample S, has a larger molecular weight, a much higher vinyl content and a lower amount of bound styrene. This indicates that Sample B is a copolymer in which an SBS block copolymer is copolymerized with a 1,2-polybutadiene and such a copolymer is contained in the polymer of this invention.

## EXAMPLE 21

Preparation of catalyst

### (1)  Preparation of polybutadienyllithium

In a 500 ml pressure bottle which had first been purged with nitrogen were placed 300 ml of cyclohexane, 30 g of butadiene, 55.5 ml of a 0.5 mole/litre solution of butyllithium in cyclohexane (55.5 ml corresponds to 28 mM of butyllithium) and 1.5 ml of a 0.5 mole/litre solution of tetrahydrofuran in cyclohexane (1.5 ml corresponds to 0.75 mM of tetrahydrofuran). Polymerization was conducted at 60°C for 3 hours. It was confirmed that, after 3 hours, the polymerization had proceeded almost 100%. Thus, a polybutadienyllithium solution was obtained.

### (2)  Preparation of reacted cobalt

In a 300 ml pressure bottle provided with a stirrer (which had first been purged with nitrogen) were placed 5 ml of butadiene and 10 ml of a 0.2 mole/litre solution of cobalt octylate in cyclohexane, and the pressure bottle was stoppered. The pressure bottle was then placed in cold water at 0°C for cooling. While rotating the stirrer vigorously, 58.1 ml of the polybutadienyllithium solution prepared above (58.1 ml corresponds to 4 mM of lithium) were added and the resulting mixture was stirred for 1 hour.

## Suspension polymerization in aqueous system

In an 800 ml autoclave (which had first been purged with nitrogen) were placed 200 ml of distilled water which had been deoxygenated by nitrogen bubbling, 0.4 g of the sodium salt of a maleic anhydride-diisobutylene copolymer and 0.2 g of potassium chloride. The mixture was cooled to 5°C. 50 g of butadiene and 18.3 ml of the reacted cobalt solution prepared above (18.3 ml corresponds to 0.5 mM of cobalt) were added, and the resulting mixture was stirred for about 10 minutes at 500 rpm. Upon addition of 0.3 mM of carbon disulphide, polymerization started and was continued for 30 minutes at 15°C. The polymer formed was collected on a cloth, immersed in a 0.5% solution of BHT in methanol and then vacuum-dried at 60°C overnight, to obtain 31.3 g of a bead polymer having an average particle diameter of 0.7 mm. The polymer had a melting point of 187°C. On infrared absorption analysis, the polymer showed a strong absorption due to 1,2-polybutadiene at 911 $cm^{-1}$.

CLAIMS:

1.   A diene polymer producable by polymerizing a conjugated diene monomer in an organic solvent solution of an active lithium-terminated polymer in the presence of a catalyst comprising (A) a cobalt compound and (B) carbon disulphide and/or phenylisothiocyanic acid, said diene polymer comprising a 1,2-polybutadiene portion having a 1,2-configuration content of 70% or more.

2.   A diene polymer according to Claim 1, wherein the active lithium--terminated polymer is a polymer produced by polymerizing a monomer or monomers with a lithium catalyst.

3.   A diene polymer according to Claim 2, wherein the polymer produced by polymerizing a monomer or monomers with a lithium catalyst is a polymer or copolymer of an aromatic vinyl compound, a copolymer of an aromatic vinyl compound and a conjugated diene compound or a polymer or copolymer of a conjugated diene compound.

4.   A diene polymer according to Claim 2, wherein the polymer produced by polymerizing a monomer or monomers with a lithium catalyst is a polymer or copolymer of a conjugated diene compound.

5. A diene polymer according to Claim 2, wherein the polymer produced by polymerizing a monomer or monomers with a lithium catalyst is a copolymer of an aromatic vinyl compound and a conjugated diene compound.

6. A diene polymer according to Claim 5, wherein the copolymer of an aromatic vinyl compound and a conjugated diene compound is a block copolymer.

7. A diene polymer according to Claim 6, wherein the block copolymer is at least one block copolymer represented by the formula $(A-B)_n$, $(A-B)_n-A$ or $(A-B)_m-X$ [wherein A is a polymer block of an aromatic vinyl compound; B is a polymer block comprising as the major component a conjugated diene; $n \geq 1$; $m \geq 1$; and X is the residue of a coupling agent].

8. A diene polymer according to any one of the preceding Claims, wherein the 1,2-polybutadiene has a melting point of 100°C or more.

9. A diene polymer according to Claim 8, wherein the melting point of the 1,2-polybutadiene is 120°C or more.

10. A diene polymer according to Claim 9, wherein the melting point of the 1,2-polybutadiene is 150°C or more.

11. A diene polymer according to any one of the preceding Claims, wherein the weight ratio of the active lithium-terminated polymer to the 1,2-polybutadiene is from 100:1 to 100:1,000.

12. A diene polymer according to Claim 11, wherein the weight ratio of the active lithium-terminated polymer to the 1,2-polybutadiene is from 100:1 to 100:200.

13. A diene polymer according to Claim 12, wherein the weight ratio of the active lithium-terminated polymer to the 1,2-polybutadiene is from 100:1 to 100:100.

14. A diene polymer according to any one of the preceding Claims, wherein the 1,2-content in the 1,2-polybutadiene is at least 80%.

15. A diene polymer according to Claim 14, wherein the 1,2-content in the 1,2-polybutadiene is at least 90%.

16. A diene polymer according to any one of the preceding Claims, wherein the organic solvent is at least one of aromatic hydrocarbons, aliphatic hydrocarbons, ethers and nitrogen-containing compounds.

17. A diene polymer according to any one of the preceding Claims, wherein the cobalt compound (A) is at least one of organic acid salts of cobalt, acetonate complexes of cobalt, triarylphosphine complexes of cobalt halides, pyridine complexes of cobalt halides, pyridine derivative complexes of cobalt halides and alcohol complexes of cobalt halides.

18.   A diene polymer according to any one of the preceding Claims, wherein the conjugated diene monomer is at least one of butadiene and isoprene.

19.   A diene polymer according to any one of the preceding Claims, wherein the cobalt compound (A) is used in a proportion of from 0.02 to 5 moles per mole of lithium in the active lithium-terminated polymer, and the carbon disulphide and/or phenylisothiocyanic acid (B) is used in a proportion of from 0.02 to 10 moles per mole of lithium in the active lithium-terminated polymer.

20.   A process for producing a diene polymer by polymerizing a conjugated diene monomer in an organic solvent solution of an active lithium-terminated polymer in the presence of a catalyst comprising (A) a cobalt compound and (B) carbon disulphide and/or phenyl-isothiocyanic acid.